(19) Europäisches Patentamt
European Patent Office
Office européen des brevets

(11) EP 3 722 387 B1

(12) # EUROPEAN PATENT SPECIFICATION

(45) Date of publication and mention of the grant of the patent:
**01.11.2023 Bulletin 2023/44**

(21) Application number: **19899654.8**

(22) Date of filing: **04.09.2019**

(51) International Patent Classification (IPC):
***C09J 133/08*** *(2006.01)* ***C09J 11/08*** *(2006.01)*
***C08F 220/18*** *(2006.01)* ***C08F 220/06*** *(2006.01)*
***C08F 2/24*** *(2006.01)* ***C08F 2/30*** *(2006.01)*

(52) Cooperative Patent Classification (CPC):
(C-Sets available)
**C08F 2/30; C08F 220/1808; C09J 133/08** (Cont.)

(86) International application number:
**PCT/KR2019/011396**

(87) International publication number:
**WO 2020/130285 (25.06.2020 Gazette 2020/26)**

(54) **ACRYLIC EMULSION PRESSURE-SENSITIVE ADHESIVE COMPOSITION**
DURCKEMPFINDLICHE HAFTKLEBERZUSAMMENSETZUNG AUS ACRYLEMULSION
COMPOSITION ADHÉSIVE SENSIBLE À LA PRESSION D'ÉMULSION ACRYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2018 KR 20180164124**
**03.09.2019 KR 20190109115**

(43) Date of publication of application:
**14.10.2020 Bulletin 2020/42**

(73) Proprietor: **LG CHEM, LTD.**
**Yeongdeungpo-gu,**
**Seoul 07336 (KR)**

(72) Inventors:
- **LEE, Seungmo**
  **Daejeon 34122 (KR)**
- **YANG, Seung Hun**
  **Daejeon 34122 (KR)**
- **PARK, Yong Su**
  **Daejeon 34122 (KR)**
- **HWANG, Yoontae**
  **Daejeon 34122 (KR)**
- **KIM, Hyo Min**
  **Daejeon 34122 (KR)**
- **SEO, Sungjong**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**JP-A- 2006 028 316** **KR-A- 20160 019 652**
**US-A- 6 120 638** **US-B1- 6 197 238**
**US-B1- 6 448 330**

- **G. S. Magallanes González V. L. Dimonie E. D. Sudol H. J. Yue A. Klein M. S. El Aasser: "Characterization of poly(vinyl alcohol) during the emulsion polymerization of vinyl acetate using poly(vinyl alcohol) as emulsifier", Journal of polymer science, vol. 34, no. 5, 15 April 1996 (1996-04-15) , pages 849-862, XP055717017, DOI: 10.1002/(SICI)1099-0518(19960415)34:5<849: :AID-POLA14>3.0.CO;2-I**
- **Leonard Ionut Atanase , Sophie Bistac , Gérard Riess: "Effect of poly(vinyl-co-vynil acetate) copolymer blockiness on the dynamic interfacial tension and dilational viscoelasticity of polymer-anionic surfactant complex at the water-l-chlorobutane interface", Soft Matter, vol. 11, no. 13, 1 January 2015 (2015-01-01), pages 2665-2672, XP055420900, ISSN: 1744-683X, DOI: 10.1039/C4SM02766C**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 722 387 B1

Remarks:
The file contains technical information submitted after the application was filed and not included in this specification

(52) Cooperative Patent Classification (CPC): (Cont.)

C-Sets
**C08F 220/1808, C08F 212/08, C08F 218/18, C08F 220/06, C08F 220/14;**
C08F 220/1808, C08F 218/08, C08F 220/14, C08F 212/08, C08F 220/06, C08F 220/20, C08F 220/36

## Description

[Technical Field]

Cross-reference to Related Application

The present application is based on, and claims priority from, Korean Patent Application Nos. 10-2018-0164124 and 10-2019-0109115, filed on December 18, 2018 and September 3, 2019, respectively.
The present invention relates to an acrylic emulsion pressure-sensitive adhesive composition.

[Background Art]

Pressure-sensitive adhesives (PSAs) are materials having a property of adhering to a material under a slight pressure. PSAs are viscoelastic materials, differently from adhesives, have basic properties such as loop tack, adhesion, and cohesion, and are used in a variety of industries such as printing, chemistry, medical products, home appliances, vehicles and office supply.
PSAs may be classified into acrylic, rubber-based, silicon-based, and EVA-based PSAs according to monomers used in preparation of PSAs, and may be classified into a solvent type, an emulsion type, and a hot-melt type according to the form thereof.
In the past, rubber-based PSAs or solvent-type PSAs have been mostly used in adhesive tapes and adhesive labels.
However, with increasing demands for environmentally friendly PSAs, interest in non-solvent-type PSAs is increasing, and technologies therefor are under development. Currently, use and production of non-solvent type PSAs are significantly increasing and are expected to continuously increase.
Non-solvent-type PSAs are typically prepared by aqueous emulsion polymerization, and are required to have low production of agglomerates and to stably exhibit excellent adhesion properties in terms of economic efficiency and processability improvement.
In such aqueous PSAs prepared by aqueous emulsion polymerization, hydrophilic emulsifiers are used. Generally, amphiphilic monomeric molecules having both hydrophilicity and hydrophobicity are used as hydrophilic emulsifiers. In particular, amphiphilic monomeric molecules containing a hydrophilic group with high polarity, such as sulfonate, are used for particle formation and retention stability in an aqueous system.
Meanwhile, when the emulsifiers have too many hydrophilic groups or excessively strong hydrophilicity, there is a problem of a weak adhesive force to a hydrophobic base material, such as polyethylene and polypropylene.
Further, when applied to hydrophilic materials, residues may be left at the time of detaching the PSA due to an excessively strong adhesive force.
To solve these problems, a method of using hydrophobic monomers in a pressure-sensitive adhesive composition or a method of increasing the degree of crosslinking has been suggested. In this case, however, there is also a problem in that an adhesive force to hydrophilic base materials is decreased.
US6448330 discloses an aqueous emulsion of a homopolymer consisting of units of a monomer selected from the group consisting of an acrylic acid ester monomer, a methacrylic acid ester monomer, a styrenic monomer and a diene monomer, or a copolymer predominantly comprised of units of at least one monomer selected from said group of monomers, which is dispersion-stabilized with a water-soluble high-molecular-weight compound having a molecular weight of at least 300 and having an alcoholic hydroxyl group. The emulsion can be used as an adhesive.
US6120638 discloses an adhesive composition comprising a polymer made by aqueous emulsion polymerization in the presence of a polyvinyl alcohol colloidal stabilizer and the polymer consists of from about 30 weight percent to about 44 weight percent first repeating units, each derived from a vinyl ester monomer; about 55 weight percent to about 70 weight percent second repeating units, each derived from an alkyl acrylate monomer selected from the group consisting of ethyl acrylate, butyl acrylate, 2-ethylhexyl acrylate or mixtures thereof; and about 0.1 weight percent to about 10 weight percent third repeating units derived from a monoethylenically unsaturated polar monomer provided that the polymer comprises no more than about 3 weight percent repeating units derived from a monoethylenically unsaturated carboxylic acid monomer.
Accordingly, there is a demand for the development of a novel PSA which exhibits an enhanced adhesive force to hydrophobic base materials while maintaining the adhesive force to hydrophilic materials without leaving residues.

[Disclosure]

[Technical Problem]

The present invention provides a pressure-sensitive adhesive composition which exhibits an excellent adhesive force to both hydrophilic and hydrophobic base materials without leaving residues on a material to be adhered, and a method of preparing the same.

[Technical Solution]

The present invention provides an acrylic emulsion pressure-sensitive adhesive composition including a copolymer which is prepared by emulsion polymerization of a monomer mixture including a (meth)acrylic acid ester-based monomer, a vinyl-based monomer, and an unsaturated carboxylic acid-based monomer in the presence of a polymeric emulsifier which is represented by the following Chemical Formula 1 and has a degree of hydration of 75 % to 99 %, represented by the following Equation 1, and a number average molecular weight of 1000 g/mol to 8000 g/mol.

[Chemical Formula 1]

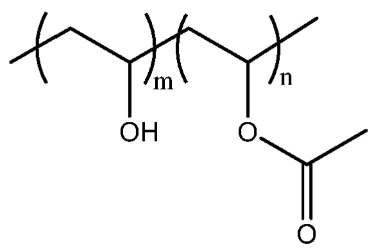

[Equation 1]

$$\text{Degree of hydration} = m/(m+n)*100$$

The (meth)acrylic acid ester-based monomer may be one or more selected from the group consisting of methyl(meth)acrylate, ethyl(meth)acrylate, propyl(meth)acrylate, isopropyl(meth)acrylate, butyl(meth)acrylate, isobutyl(meth)acrylate, t-butyl(meth)acrylate, pentyl(meth)acrylate, hexyl(meth)acrylate, heptyl(meth)acrylate, octyl(meth)acrylate, isooctyl(meth)acrylate, 2-ethylhexyl(meth)acrylate, decyl(meth)acrylate, isodecyl(meth)acrylate, dodecyl(meth)acrylate, isobomyl(meth)acrylate, and lauryl(meth)acrylate.

The vinyl-based monomer may be one or more selected from the group consisting of a vinyl ester-based monomer containing an alkyl group having 1 to 5 carbon atoms, and an aromatic vinyl-based monomer.

The unsaturated carboxylic acid-based monomer may be one or more selected from the group consisting of maleic anhydride, fumaric acid, crotonic acid, itaconic acid, and (meth)acrylic acid.

Further, the present invention provides a method of preparing the acrylic emulsion pressure-sensitive adhesive composition, the method including the steps of:

preparing a pre-emulsion including the monomer mixture including the (meth)acrylic acid ester-based monomer, the vinyl-based monomer, and the unsaturated carboxylic acid-based monomer, a crosslinking agent, the polymeric emulsifier which is represented by Chemical Formula 1 and has a degree of hydration of 75 % to 99 %, represented by Equation 1, and a number average molecular weight of 1000 g/mol to 8000 g/mol; and
performing emulsion polymerization of the pre-emulsion in the presence of an initiator.

The polymeric emulsifier may be included in an amount of 0.1 parts by weight to 5.0 parts by weight with respect to 100 parts by weight of the monomer mixture.

The (meth)acrylic acid ester-based monomer may be included in an amount of 70 parts by weight to 99 parts by weight with respect to 100 parts by weight of the monomer mixture.

The vinyl-based monomer may be included in an amount of 1 part by weight to 25 parts by weight with respect to 100 parts by weight of the (meth)acrylic acid ester-based monomer.

The unsaturated carboxylic acid-based monomer may be included in an amount of 0.1 parts by weight to 5

parts by weight with respect to 100 parts by weight of the (meth)acrylic acid ester-based monomer.

[Effect of the Invention]

According to the present invention, a pressure-sensitive adhesive composition which exhibits an excellent adhesive force to both hydrophilic and hydrophobic base materials without leaving residues on a material to be adhered, and a method of preparing the same, are provided.

[Best Mode for Carrying Out the Invention]

In the present invention, the terms "first", "second", and the like are used to describe a variety of components, and these terms are merely employed to differentiate a certain component from other components.

Further, the terms used in this description are just for explaining exemplary embodiments and are not intended to restrict the present invention. The singular expression may include the plural expression unless it is differently expressed contextually. It must be understood that the term "include", "equip", or "have" in the present description is only used for designating the existence of characteristics taken, numbers, steps, components, or combinations thereof, and does not exclude the existence or the possibility of addition of one or more different characteristics, numbers, steps, components, or combinations thereof beforehand.

The present invention may be variously modified and have various forms, and specific examples of the present invention are explained in this description.

Hereinafter, the present invention will be described in more detail.

According to one embodiment of the present invention, an acrylic emulsion pressure-sensitive adhesive composition is provided, including a copolymer which is prepared by emulsion polymerization of a monomer mixture including a (meth)acrylic acid ester-based monomer, a vinyl-based monomer, and an unsaturated carboxylic acid-based monomer in the presence of a polymeric emulsifier which is represented by the following Chemical Formula 1 and has a degree of hydration of 75 % to 99 %, represented by the following Equation 1, and a number average molecular weight of 1000 g/mol to 8000 g/mol:

[Chemical Formula 1]

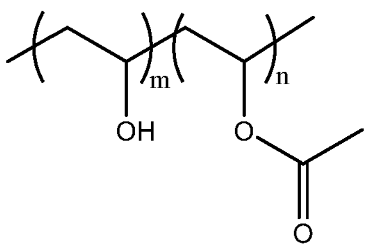

[Equation 1]

$$\text{Degree of hydration} = m/(m+n)*100$$

wherein, in Chemical Formula 1 and Equation 1, m and n represent the number of moles of repeating units constituting the polymer.

Generally, as an emulsifier in the preparation of an aqueous acrylic emulsion pressure-sensitive adhesive composition, amphiphilic monomeric molecules containing a hydrophilic group with high polarity, such as sulfonate or sulfate, are used. However, an acrylic emulsion pressure-sensitive adhesive composition including a copolymer prepared by using the above emulsifier, i.e., an emulsion of latex particles, has a problem of leaving residues due to an excessively strong adhesive force to a hydrophilic base material, and on the contrary, a problem of exhibiting a low adhesive force to a hydrophobic base material such as polyethylene, polypropylene, etc.

Accordingly, the present inventors conducted studies on a pressure-sensitive adhesive composition which exhibits an excellent adhesive force to both hydrophilic and hydrophobic base materials without leaving residues on a material to be adhered, and as a result, they found that when the polymeric emulsifier of Chemical Formula 1 is used, adhesion properties may be improved, thereby completing the present invention.

The polymeric emulsifier is a modified polyvinyl alcohol-based polymer obtained by copolymerizing vinyl alcohol

and methyl vinyl ketone monomers, and any one of alternating, random, and block copolymers is possible. In the polymeric emulsifier, the hydroxyl group which is a hydrophilic group functions to maintain particle stability in an aqueous phase, and the polymer chain portion may serve as a space in which polymerization occurs during emulsion polymerization.

Preferably, the polymeric emulsifier may have a degree of hydration of 75 % to 99 %, or 78 % to 95 %, the degree of hydration represented by the following Equation 1:

[Equation 1]

$$\text{Degree of hydration} = m/(m+n)*100.$$

The degree of hydration is a percentage of repeating units derived from vinyl alcohol in the polymer. As the degree of hydration is higher, the polymer is more hydrophilic. If the degree of hydration is less than 75 %, there is a problem in that residues may be left due to excess carboxylic acid functional groups, and if the degree of hydration is more than 99 %, the polymeric emulsifier may substantially correspond to polyvinyl alcohol, which is not suitable as the emulsifier because its solubility in water dramatically drops. Therefore, it is preferable that the polymeric emulsifier satisfies the above range of the degree of hydration.

Preferably, the polymeric emulsifier has a number average molecular weight in the range of 1000 g/mol to 8000 g/mol. If the number average molecular weight of the polymeric emulsifier is less than 1000 g/mol, there is a problem in that the length of the polymer chain is too short to act as the emulsifier. If the number average molecular weight of the polymeric emulsifier is more than 8000 g/mol, there is a problem in that its solubility in water is low, and its application is difficult. In this regard, the number average molecular weight of the polymeric emulsifier may be determined by gel permeation chromatography (GPC), as specified in examples described below.

Meanwhile, the polymeric emulsifier is used in an amount of 0.1 parts by weight to 5 parts by weight, or 0.5 parts by weight to 3 parts by weight, with respect to a total of 100 parts by weight of the monomer mixture. If the content of the polymeric emulsifier is less than 0.1 parts by weight with respect to 100 parts by weight of the monomer mixture, there is a problem in that due to the lack of emulsifier, normal emulsion polymerization through micelle formation may hardly occur and large agglomerates may be produced. If the content of the polymeric emulsifier exceeds 5 parts by weight, there is a problem in that, due to use of excess emulsifier, adhesion properties may be reduced.

Meanwhile, in the acrylic emulsion pressure-sensitive adhesive composition of the present invention, the (meth)acrylic acid ester-based monomer, the vinyl-based monomer, and the unsaturated carboxylic acid monomer may be mixed and then used as monomers. When the three kinds of monomers are used, the acrylic emulsion pressure-sensitive adhesive composition of the present invention may have the effects of improving overall adhesive force and holding force.

As used herein, the term "monomer mixture" means a mixture of all monomers used in the polymerization. The monomer mixture is not particularly limited, as long as it may be used in the emulsion polymerization reaction for the preparation of the acrylic emulsion resin, based on the above monomers. For example, the above monomers in a mixed state may be introduced to the polymerization reaction, or the above monomers may be sequentially introduced to the polymerization reaction.

The (meth)acrylic acid ester-based monomer may include a linear alkyl group having 1 to 10 carbon atoms, and specifically, one or more selected from the group consisting of methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, heptyl (meth)acrylate, octyl (meth)acrylate, isooctyl (meth)acrylate, 2-ethylhexyl (meth)acrylate, decyl (meth)acrylate, isodecyl (meth)acrylate, dodecyl (meth)acrylate, isobornyl (meth)acrylate, and lauryl (meth)acrylate.

The (meth)acrylic acid ester-based monomer may be included in an amount of 70 parts by weight to 99 parts by weight with respect to 100 parts by weight of the monomer mixture.

The vinyl-based monomer may be one or more selected from the group consisting of a vinyl ester-based monomer containing an alkyl group having 1 to 5 carbon atoms, and an aromatic vinyl-based monomer.

Specifically, the vinyl ester-based monomer may include a monomer in the form of ester including a vinyl group at one end of the molecule and an alkyl group having 1 to 5 carbon atoms at the other end thereof. The vinyl ester-based monomer may include, for example, one or more selected from the group consisting of vinyl acetate, vinyl propionate, vinyl butyrate, and vinyl pentanoate.

The aromatic vinyl-based monomer may include one or more selected from the group consisting of styrene, methyl styrene, butyl styrene, chlorostyrene, vinyl benzoate, methyl vinyl benzoate, vinyl naphthalene, chloromethylstyrene, hydroxymethylstyrene, and divinylbenzene.

The vinyl-based monomer is used in an amount of 1 part by weight to 25 parts by weight or 5 parts by weight to 20 parts by weight with respect to 100 parts by weight of the (meth)acrylic acid ester-based monomer, and therefore,

the repeating units derived from the vinyl-based monomer in the emulsion polymer are included in an amount of about 1 part by weight to 25 parts by weight or 5 parts by weight to 20 parts by weight with respect to 100 parts by weight of the (meth)acrylic acid ester-based monomer.

If the vinyl-based monomer is used in an excessively large amount, formation of polymer chains is hindered by the reaction rate difference, and thus it is difficult to secure the required level of the adhesive force, and residual monomers are greatly produced. On the contrary, if the vinyl-based monomer is used in an excessively small amount, there is a problem in that the adhesive force is reduced.

The unsaturated carboxylic acid-based monomer may be one or more selected from the group consisting of maleic anhydride, fumaric acid, crotonic acid, itaconic acid, and (meth)acrylic acid, but is not limited thereto.

The unsaturated carboxylic acid-based monomer is used in an amount of 0.1 part by weight to 5 parts by weight or 0.5 parts by weight to 2 parts by weight with respect to 100 parts by weight of the (meth)acrylic acid ester-based monomer, and therefore, the repeating units derived from the unsaturated carboxylic acid-based monomer in the emulsion polymer are included in an amount of about 0.1 parts by weight to 5 parts by weight or 0.5 parts by weight to 2 parts by weight with respect to 100 parts by weight of the (meth)acrylic acid ester-based monomer.

If the unsaturated carboxylic acid-based monomer is used in an excessively large amount, there is a problem in that viscosity of the copolymer particles obtained by emulsion polymerization is rapidly increased, and too much crosslinking may be formed outside the particles, leading to gelation. On the contrary, if the unsaturated carboxylic acid-based monomer is used in an excessively small amount, there is a problem in that stability of the resulting copolymer particles may be reduced.

Meanwhile, according to one embodiment of the present invention, other additives may be further included within a range that does not impair the desired effects of the present invention, in addition to the monomer mixture and the emulsifier, at the time of emulsion polymerization. For example, the additives may include one or more of a crosslinking agent, a polymerization initiator, a buffer, a wetting agent, a reducing agent, a chain transfer agent.

The crosslinking agent may include one or more selected from the group consisting of polyethylene glycol diacrylate, polypropylene glycol diacrylate, 1,6-hexanediol diacrylate, trimethylolpropane triacrylate, ethoxylated trimethylolpropane triacrylate, tripropylene glycol diacrylate, 1,3-butanediol diacrylate, pentaerythritol triacrylate, 3-trimethoxysilyl propyl methacrylate, vinyl trimethoxy silane, divinyl benzene, methacrylamide, methacrylamidoethyl ethylene urea, methacrylester ethylene urea, allyl ether ethylene urea, and [N-(2-(2-oxoimidazolin-1-yl)ethyl)(4-allylether)(3-hydroxy)butylamine]. The crosslinking agent may be used in an amount of 0 % by weight to 1.5 % by weight based on the monomer mixture.

The polymerization initiator may include water-soluble polymerization initiators such as a persulfate of ammonium or an alkali metal (e.g. APS, ammonium persulfate), hydrogen peroxide, peroxide, hydroperoxide, etc., and it may be used together with one or more kinds of reducing agents in order to perform the emulsion polymerization reaction at a low temperature, but is not limited thereto. In this regard, the polymerization initiator may be used in an amount of 0.1 % by weight to 2.0 % by weight based on the monomer mixture. Further, the polymerization initiator may be appropriately divided within the above-mentioned range and used one or more times in the polymerization step of the monomer mixture.

The buffer may include sodium bicarbonate, sodium carbonate, sodium phosphate, sodium sulfate, sodium chloride, sodium hydroxide, but is not limited thereto. Further, these may be used alone or in a mixture of two or more thereof. The buffer may play a role in adjusting pH in the polymerization reaction and imparting polymerization stability. The buffer may be used in an amount of 0.1 % by weight to 0.8 % by weight based on 100 % by weight of the monomer mixture.

The wetting agent acts as an emulsifier to lower the surface tension for coatability, and its content may be used within the range that is well known in the art. For example, the wetting agent may include a dioctyl sodium sulfosuccinate (DOSS)-based compound. The wetting agent may be used in an amount of 0.1 % by weight to 2 % by weight based on 100 % by weight of the monomer mixture.

The chain transfer agent serves to introduce homopolymers, which are polymers composed of only one type of monomer, into micelles, and may include sodium carbonate, sodium methylallyl sulfonate, n-dodecyl mercaptan, etc., but is not limited thereto. The chain transfer agent may be used in an amount of 0.01 % by weight to 0.50 % by weight based on 100 % by weight of the monomer mixture.

Meanwhile, according to another embodiment of the present invention, a method of preparing the acrylic emulsion pressure-sensitive adhesive composition is provided, the method including the steps of:

preparing a pre-emulsion including the monomer mixture including the (meth)acrylic acid ester-based monomer, the vinyl-based monomer, and the unsaturated carboxylic acid-based monomer, and the polymeric emulsifier which is represented by Chemical Formula 1; and
performing emulsion polymerization of the pre-emulsion in the presence of the initiator.

The above-described acrylic emulsion pressure-sensitive adhesive composition of the present invention may

be specifically prepared by the following method, but is not limited thereto.

According to the preparation method of the present invention, the pre-emulsion may be first prepared by mixing the monomer mixture and the polymeric emulsifier represented by Chemical Formula 1 together with water. As such, the pre-emulsion may be prepared prior to the emulsion polymerization reaction, thereby reducing production of agglomerates.

At this time, the (meth)acrylic acid ester-based monomer, the vinyl-based monomer, the unsaturated carboxylic acid-based monomer, and the polymeric emulsifier represented by Chemical Formula 1 used in the preparation of the pre-emulsion are the same as described above. Further, during preparation of the pre-emulsion, one or more of the above-described other additives, i.e., the crosslinking agent, the buffer, the wetting agent, the reducing agent, the chain transfer agent, may be added.

Next, the pre-emulsion and the polymerization initiator may be sequentially introduced at an equal ratio for a predetermined time to perform the emulsion polymerization of the pre-emulsion.

As described above, the polymerization initiator may be water-soluble polymerization initiators such as a persulfate of ammonium or an alkali metal (e.g. APS, ammonium persulfate), hydrogen peroxide, peroxide, hydroperoxide, etc., and it may be used together with one or more kinds of reducing agents in order to perform the emulsion polymerization reaction at a low temperature, but is not limited thereto. At this time, the polymerization initiator may be used in an amount of 0.1 % by weight to 2.0 % by weight based on the monomer mixture. Further, the polymerization initiator may be appropriately divided within the above-mentioned range and used one or more times in the polymerization step of the monomer mixture.

The time during which the pre-emulsion and the polymerization initiator are sequentially introduced may be 3 hours to 5 hours.

The emulsion polymerization may be performed in the presence of the polymerization initiator at a temperature of 70 °C to 90 °C for 3 hours to 8 hours while stirring. Specifically, the emulsion polymerization may be performed at a temperature of about 75 °C to about 90 °C for about 3 hours to about 6 hours. Taking into consideration the physical properties of the pressure-sensitive adhesive, the polymerization temperature may be about 75 °C to about 85 °C.

The acrylic emulsion pressure-sensitive adhesive composition of the present invention which is prepared according to the above-described method may exhibit excellent adhesion properties for both hydrophilic and hydrophobic base materials, thereby being applied to pressure-sensitive adhesive sheets. The pressure-sensitive adhesive sheets may include a pressure-sensitive adhesive film or sheet for interior/exterior materials of buildings, interior design materials, advertising films, or labels, but the present invention is not particularly limited thereto.

Hereinafter, preferred examples will be provided for better understanding of the present invention. However, the following examples are provided only for understanding the present invention more easily, and the content of the present invention is not limited thereby.

[Example]

**Example 1**

A modified polyvinyl alcohol emulsifier of the following Chemical Formula 1 having a number average molecular weight (Mn) of 1000 g/mol and a degree of hydration of 99 %, represented by the following Equation 1, was used to prepare an acrylic emulsion pressure-sensitive adhesive composition by the following method.

[Chemical Formula 1]

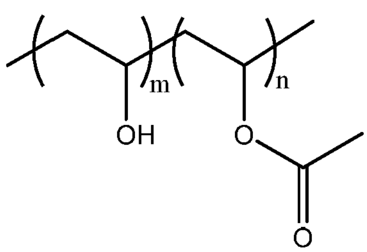

[Equation 1]

$$\text{Degree of hydration} = m/(m+n)*100$$

At this time, the number average molecular weight was measured by gel permeation chromatography (GPC), and specifically, evaluated by using Polymer Laboratories' PLgel MIX-B column (300 mm in length) and a Waters's PL-GPC220 instrument. Measurement was performed using tetrahydrofuran as a solvent at a flow rate of 1 mL/min. Samples were prepared at a concentration of 10 mg/10 mL, and then applied in an amount of 20 μL. A calibration curve generated with polystyrene standards was used to induce Mw and Mn values. 8 kinds of polystyrene standards with a molecular weight (g/mol) of 2000 / 10,000 / 30,000 / 70,000 / 200,000 / 700,000 / 2,000,000 / 4,000,000 were used.

138 g of water was put in a glass reactor with a volume of 3 L, and the temperature was raised to 85 °C and maintained under a nitrogen atmosphere.

Separately, to prepare a pre-emulsion, a solution composed of 14 g of the modified polyvinyl alcohol emulsifier, 6 g of a 60 % by weight aqueous sodium dioctyl sulfosuccinate solution, 1.5 g of sodium hydroxide, and 176 g of water was added to a mixture of 557 g of 2-ethylhexyl acrylate, 56 g of methyl methacrylate, 57 g of vinyl acetate, 14 g of styrene, 14 g of acrylic acid, 14 g of hydroxyethyl acrylate, 1.5 g of methacrylamidoethyl ethylene urea, or N-(2-(2-oxoimidazolidin-1-yl)ethyl)methacrylamide (Sipomer® WAMII), and mixed using a stirrer to prepare a cloudy pre-emulsion.

3 g of a 20 % by weight aqueous ammonium persulfate solution was introduced to the glass reactor containing water, and dissolved under stirring for 5 minutes. The pre-emulsion and 70 g of a 3 % by weight aqueous ammonium persulfate solution were sequentially introduced into the glass reactor for total 5 hours and total 5.5 hours, respectively, and the temperature was raised to 85 °C to allow an emulsion polymerization reaction.

After completely introducing the pre-emulsion and the aqueous ammonium persulfate solution, the temperature was raised to 85 °C and maintained for about 1 hour to complete the reaction of the unreacted monomers, and then cooled to room temperature, thereby preparing an acrylic emulsion resin.

## Example 2

An acrylic emulsion resin was prepared in the same manner as in Example 1, except that a modified polyvinyl alcohol emulsifier having a number average molecular weight of 1500 g/mol and a degree of hydration of 78 % was used as the emulsifier of Chemical Formula 1.

## Example 3

An acrylic emulsion resin was prepared in the same manner as in Example 1, except that a modified polyvinyl alcohol emulsifier having a number average molecular weight of 4000 g/mol and a degree of hydration of 85 % was used as the emulsifier of Chemical Formula 1.

## Example 4

An acrylic emulsion resin was prepared in the same manner as in Example 1, except that a modified polyvinyl alcohol emulsifier having a number average molecular weight of 6,000 g/mol and a degree of hydration of 78 % was used as the emulsifier of Chemical Formula 1.

## Example 5

An acrylic emulsion resin was prepared in the same manner as in Example 1, except that a modified polyvinyl alcohol emulsifier having a number average molecular weight of 7500 g/mol and a degree of hydration of 95 % was used as the emulsifier of Chemical Formula 1.

## Comparative Example 1

An acrylic emulsion resin was prepared in the same manner as in Example 1, except that 22 g of 30 % by weight sodium polyoxyethylene lauryl ether sulfate was used, instead of the emulsifier of Chemical Formula 1.

## Experimental Example

### Fabrication of Pressure-Sensitive Adhesive Sheets

Each of the acrylic pressure-sensitive adhesives prepared in Examples 1 to 5 and Comparative Examples 1 and 2 was coated onto a silicone-coated release paper, which was then dried in an oven at 120 °C for about 1 minute to form a pressure-sensitive adhesive resin coating layer having a thickness of about 20 μm. The pressure-sensitive

adhesive resin coated on the silicone release paper was laminated with art paper to form a pressure-sensitive adhesive sheet. The pressure-sensitive adhesive sheet was cut to a size of 25 mm×200 mm, thereby completing fabrication of a pressure-sensitive adhesive tape specimen.

## Evaluation of Physical Properties

1) Loop tack test

Measurement was performed for each specimen fabricated above according to the FINAT Test Method FTM-9.
After preparing a specimen with a size of 1 inch×20 cm, the release paper was removed, both sides of the sheet were folded to form a loop shape, and then both ends were fixed. This loop was instantaneously attached to the surface of a square plate-shaped pressure-sensitive adhesive base material made of HDPE. When detached after 5 seconds, a force corresponding to the maximum force was measured in a measurement environment of 23 °C and 50 % humidity. After preparing five or more measurement specimens, the loop tack was measured and averaged (unit: N/in).

2) Peel strength test

Measurement was performed for each pressure-sensitive adhesive sheet fabricated above according to the FINAT Test Method FTM-9.
After preparing a specimen with a size of 1 inch×20 cm, the surface of a square plate-shaped pressure-sensitive adhesive base material made of HDPE and the attachment surface were attached to each other in a size of 1 inch × 1 inch or larger, and compressed by reciprocating a 2 kg roller twice. When detached in the direction of 90° to the attachment surface at a speed of 300 mm/min after 20 minutes, a force corresponding to the maximum force was measured in a measurement environment of 23 °C and 50 % humidity. After preparing five or more measurement specimens, the force was measured and averaged.

3) Residual ratio test

The fabricated pressure-sensitive adhesive sheet was attached to stainless steel (SUS), then aged at a temperature of 60 °C and relative humidity of 60 RH% for 24 hours, and then peeled off in the direction of 180 degrees to perform a peeling strength test. After peeling off, a ratio of the area on which the adhesive remained to the entire area of SUS was examined with the unaided eye to determine the residual ratio.
The loop tack, the peeling strength, and the residual ratio of each of the pressure-sensitive adhesive sheets of the examples and comparative examples, which were measured by the above methods, are shown in Table 1 below.

[Table 1]

| | Loop tack (HDPE, N/in) | Peel (HDPE, N/in) | Residual ratio (SUS, %) |
|---|---|---|---|
| Example 1 | 7.8 | 3.8 | 17 |
| Example 2 | 7.2 | 3.6 | 37 |
| Example 3 | 6.5 | 3.5 | 23 |
| Example 4 | 7.3 | 3.5 | 32 |
| Example 5 | 6.4 | 3.7 | 14 |
| Comparative Example 1 | 6.3 | 2.8 | 80 |

Referring to Table 1, it was confirmed that the acrylic emulsion pressure-sensitive adhesive compositions of the present invention have a remarkably low residual ratio while exhibiting excellent adhesive force and peeling strength to hydrophobic base materials by using the polymeric emulsifier having the structure of Chemical Formula 1, as compared with Comparative Example 1 in which the monomeric emulsifier was used.

## Claims

**1.** An acrylic emulsion pressure-sensitive adhesive composition comprising a copolymer which is prepared by emulsion polymerization of a monomer mixture comprising a (meth)acrylic acid ester-based monomer, a vinyl-based monomer,

and an unsaturated carboxylic acid-based monomer in the presence of a polymeric emulsifier which is represented by the following Chemical Formula 1 and has a degree of hydration of 75 % to 99 %, represented by the following Equation 1, and a number average molecular weight, determined by gel permeation chromatography as indicated in the experimental section, of 1,000 g/mol to 8,000 g/mol:

[Chemical Formula 1]

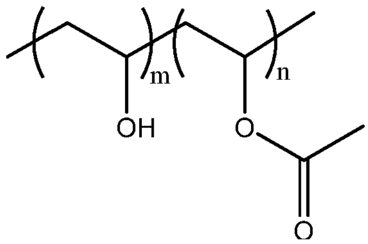

[Equation 1]

$$\text{Degree of hydration} = m/(m+n)*100,$$

wherein, in Chemical Formula 1 and Equation 1, m and n represent the number of moles of repeating units constituting the polymer.

2. The acrylic emulsion pressure-sensitive adhesive composition of claim 1, wherein the (meth)acrylic acid ester-based monomer is one or more selected from the group consisting of methyl(meth)acrylate, ethyl(meth)acrylate, propyl(meth)acrylate, isopropyl(meth)acrylate, butyl(meth)acrylate, isobutyl(meth)acrylate, t-butyl(meth)acrylate, pentyl(meth)acrylate, hexyl(meth)acrylate, heptyl(meth)acrylate, octyl(meth)acrylate, isooctyl(meth)acrylate, 2-ethylhexyl(meth)acrylate, decyl(meth)acrylate, isodecyl(meth)acrylate, dodecyl(meth)acrylate, isobomyl(meth)acrylate, and lauryl(meth)acrylate.

3. The acrylic emulsion pressure-sensitive adhesive composition of claim 1, wherein the vinyl-based monomer is one or more selected from the group consisting of a vinyl ester-based monomer containing an alkyl group having 1 to 5 carbon atoms; and an aromatic vinyl-based monomer.

4. The acrylic emulsion pressure-sensitive adhesive composition of claim 1, wherein the unsaturated carboxylic acid-based monomer is one or more selected from the group consisting of maleic anhydride, fumaric acid, crotonic acid, itaconic acid, and (meth)acrylic acid.

5. A method of preparing an acrylic emulsion pressure-sensitive adhesive composition, the method comprising the steps of:

preparing a pre-emulsion including a monomer mixture including a (meth)acrylic acid ester-based monomer, a vinyl-based monomer, and an unsaturated carboxylic acid-based monomer, and a polymeric emulsifier which is represented by Chemical Formula 1 and has a degree of hydration of 75 % to 99 %, represented by Equation 1, and a number average molecular weight, determined by gel permeation chromatography as indicated in the experimental section, of 1000 g/mol to 8000 g/mol; and
performing emulsion polymerization by mixing the pre-emulsion with an initiator:

[Chemical Formula 1]

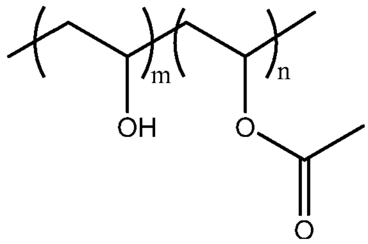

[Equation 1]

Degree of hydration = m/(m+n)*100,

wherein, in Chemical Formula 1 and Equation 1, m and n represent the number of moles of repeating units constituting the polymer.

**6.** The method of claim 5, wherein the polymeric emulsifier is included in an amount of 0.1 parts by weight to 5.0 parts by weight with respect to 100 parts by weight of the monomer mixture.

**7.** The method of claim 5, wherein the (meth)acrylic acid ester-based monomer is included in an amount of 70 parts by weight to 99 parts by weight with respect to 100 parts by weight of the monomer mixture.

**8.** The method of claim 5, wherein the vinyl-based monomer is included in an amount of 1 part by weight to 25 parts by weight with respect to 100 parts by weight of the (meth)acrylic acid ester-based monomer.

**9.** The method of claim 5, wherein the unsaturated carboxylic acid-based monomer is included in an amount of 0.1 parts by weight to 5 parts by weight with respect to 100 parts by weight of the (meth)acrylic acid ester-based monomer.

**Patentansprüche**

**1.** Druckempfindliche Haftkleberzusammensetzung aus Acrylemulsion, umfassend ein Copolymer, das hergestellt ist durch Emulsionspolymerisation einer Monomermischung, die ein Monomer auf Basis von (Meth)acrylsäureester, ein Monomer auf Vinylbasis und ein Monomer auf Basis von ungesättigter Carbonsäure umfasst, in der Gegenwart eines polymeren Emulgators, der durch die folgende chemische Formel 1 dargestellt ist und einen Hydratisierungsgrad von 75% bis 99%, dargestellt durch die folgende Gleichung 1, und ein Zahlenmittelmolekulargewicht, bestimmt durch Gelpermeationschromatographie, wie im experimentellen Abschnitt angegeben, von 1,000 g/mol bis 8,000 g/mol aufweist:

[Chemische Formel 1]

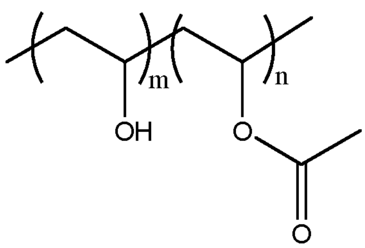

[Gleichung 1]

$$\text{Hydratisierungsgrad} = m/(m+n)*100,$$

wobei in chemischer Formel 1 und Gleichung 1 m und n die Anzahl an Mol an Wiederholungseinheiten, die das Polymer ausbilden, darstellen.

**2.** Druckempfindliche Haftkleberzusammensetzung aus Acrylemulsion nach Anspruch 1, wobei das Monomer auf Basis von (Meth)acrylsäureester eines oder mehrere ist, ausgewählt aus der Gruppe bestehend aus Methyl(meth)acrylat, Ethyl(meth)acrylat, Propyl(meth)acrylat, Isopropyl(meth)acrylat, Butyl(meth)acrylat, Isobutyl(meth)acrylat, t-Butyl(meth)acrylat, Pentyl(meth)acrylat, Hexyl(meth)acrylat, Heptyl(meth)acrylat, Octyl(meth)acrylat, Isooctyl(meth)acrylat, 2-Ethylhexyl(meth)acrylat, Decyl(meth)acrylat, Isodecyl(meth)acrylat, Dodecyl(meth)acrylat, Isobornyl(meth)acrylat und Lauryl(meth)acrylat.

**3.** Druckempfindliche Haftkleberzusammensetzung aus Acrylemulsion nach Anspruch 1, wobei das Monomer auf Vinylbasis eines oder mehrere ist, ausgewählt aus der Gruppe bestehend aus einem Monomer auf Basis von Vinylester, das eine Alkylgruppe mit 1 bis 5 Kohlenstoffatomen enthält; und einem Monomer auf Basis von aromatischem Vinyl.

**4.** Druckempfindliche Haftkleberzusammensetzung auf Basis von Acrylemulsion nach Anspruch 1, wobei das Monomer auf Basis von ungesättigter Carbonsäure eines oder mehrere ist, ausgewählt aus der Gruppe bestehend aus Maleinsäureanhydrid, Fumarsäure, Crotonsäure, Itaconsäure und (Meth)acrylsäure.

**5.** Verfahren zum Herstellen einer druckempfindlichen Haftkleberzusammensetzung aus Acrylemulsion, wobei das Verfahren die Schritte umfasst:

Herstellen einer Präemulsion, die eine Monomermischung, die ein Monomer auf Basis von (Meth)acrylsäureester, ein Monomer auf Vinylbasis und ein Monomer auf Basis von ungesättigter Carbonsäure einschließt, und einen polymeren Emulgator, der durch chemische Formel 1 dargestellt ist und einen Hydratisierungsgrad von 75% bis 99%, dargestellt durch Gleichung 1, und ein Zahlenmittelmolekulargewicht, bestimmt durch Gelpermeationschromatographie wie in dem experimentellen Abschnitt angegeben, von 1,000 g/mol bis 8,000 g/mol aufweist, einschließt; und
Durchführen von Emulsionspolymerisation durch Mischen der Präemulsion mit einem Initiator:

[Chemical Formula 1]

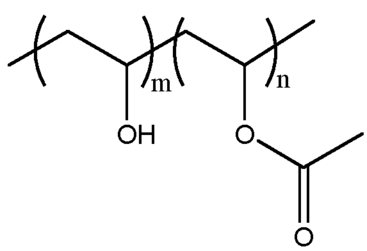

[Equation 1]

$$\text{Hydratisierungsgrad} = m/(m+n)*100,$$

wobei in chemischer Formel 1 und Gleichung 1 m und n die Anzahl an Mol von Wiederholungseinheiten, die das Polymer ausbilden, darstellen.

**6.** Verfahren nach Anspruch 5, wobei der polymere Emulgator in einer Menge von 0,1 Gewichtsteilen bis 5,0 Gewichtsteilen in Bezug auf 100 Gewichtsteile der Monomermischung eingeschlossen ist.

7. Verfahren nach Anspruch 5, wobei das Monomer auf Basis von (Meth)acrylsäureester in einer Menge von 70 Gewichtsteilen bis 99 Gewichtsteilen in Bezug auf 100 Gewichtsteile der Monomermischung eingeschlossen ist.

8. Verfahren nach Anspruch 5, wobei das Monomer auf Vinylbasis in einer Menge von 1 Gewichtsteil bis 25 Gewichtsteile in Bezug auf 100 Gewichtsteile des Monomers auf Basis von (Meth)acrylsäureester eingeschlossen ist.

9. Verfahren nach Anspruch 5, wobei das Monomer auf Basis von ungesättigter Carbonsäure in einer Menge von 0,1 Gewichtsteilen bis 5 Gewichtsteilen in Bezug auf 100 Gewichtsteile des Monomers auf Basis von (Meth)acrylsäureester eingeschlossen ist.

## Revendications

1. Composition adhésive sensible à la pression en émulsion acrylique comprenant un copolymère qui est préparé par polymérisation en émulsion d'un mélange de monomères comprenant un monomère à base d'ester acide (méth)acrylique, un monomère à base de vinyle, et un monomère à base d'acide carboxylique insaturé en presence d'un émulsifiant polymère qui est représenté par la Formule chimique 1 ci-après et a un degré d'hydratation compris entre 75 % et 99 %, représenté par l'Équation 1 ci-après, et un poids moléculaire moyen en nombre compris entre 1000 g/mol et 8000 g/mol :

[Formule chimique 1]

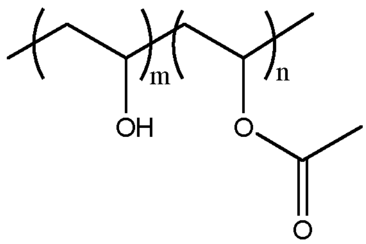

[Équation 1]

$$\text{Degré d'hydratation} = m/(m+n)*100,$$

dans lequel, dans la Formule chimique 1 et l'Équation 1, m et n représentent le nombre de moles d'unités de répétition constituant le polymère.

2. Composition adhésive sensible à la pression en émulsion acrylique selon la revendication 1, dans laquelle le monomère à base d'ester acide (méth)acrylique est un ou plusieurs éléments sélectionnés dans le groupe constitué de méthyl(méth)acrylate, éthyl(méth)acrylate, propyl(méth)acrylate, isopropyl(méth)acrylate, butyl(méth)acrylate, isobutyl(méth)acrylate, t-butyl(méth)acrylate, pentyl(méth)acrylate, hexyl(méth)acrylate, heptyl(méth)acrylate, octyl(méth)acrylate, isooctyl(méth)acrylate, 2-ethylhexyl(méth)acrylate, décyl(méth)acrylate, isodécyle(méth)acrylate, dodécyl(méth)acrylate, isobornyl(méth)acrylate et lauryl(méth)acrylate.

3. Composition adhésive sensible à la pression en émulsion acrylique selon la revendication 1, dans laquelle le monomère à base de vinyle est un ou plusieurs éléments sélectionnés dans le groupe constitué d'un monomère à base d'ester de vinyle contenant un groupe alkyle ayant 1 à 5 atomes de carbone ; et un monomère à base de vinyle aromatique.

4. Composition adhésive sensible à la pression en émulsion acrylique selon la revendication 1, dans laquelle le monomère à base d'acide carboxylique insaturé est un ou plusieurs éléments sélectionnés dans le groupe constitué de l'anhydride maléique, l'acide fumarique, l'acide crotonique, l'acide itaconique et l'acide méthacrylique.

5. Procédé de préparation d'une composition adhésive sensible à la pression en émulsion acrylique, le procédé comprenant les étapes consistant à :

préparer une pré-émulsion incluant un mélange de monomères incluant un monomère à base d'ester acide (méth)acrylique, un monomère à base de vinyle et un monomère à base d'acide carboxylique insaturé, et un émulsifiant polymère qui est représenté par la Formule chimique 1 ci-après et a un degré d'hydratation compris entre 75 % et 99 %, représenté par l'Équation 1, et un poids moléculaire moyen en nombre, déterminé par chromatographie par perméation de gel comme indiqué dans la section expérimentale, compris entre 1000 g/mol et 8000 g/mol ; et

effectuer une polymérisation en émulsion en mélangeant la pré-émulsion avec un initiateur :

[Formule chimique 1]

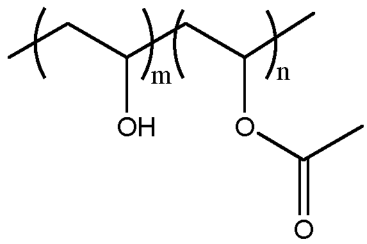

[Équation 1]

$$\text{Degré d'hydratation} = m/(m+n)*100,$$

dans lequel, dans la Formule chimique 1 et l'Équation 1, m et n représentent le nombre de moles d'unités de répétition constituant le polymère.

**6.** Procédé selon la revendication 5, dans lequel l'émulsifiant polymère est inclus dans une quantité comprise entre 0,1 partie en poids et 5,0 parties en poids pour 100 parties en poids du mélange de monomères.

**7.** Procédé selon la revendication 5, dans lequel le monomère à base d'ester acide (méth)acrylique est inclus dans une quantité comprise entre 70 parties en poids et 99 parties en poids pour 100 parties en poids du mélange de monomères.

**8.** Procédé selon la revendication 5, dans lequel le monomère à base de vinyle est inclus dans une quantité comprise entre 1 partie en poids et 25 parties en poids pour 100 parties en poids du monomère à base d'ester acide (méth)acrylique.

**9.** Procédé selon la revendication 5, dans lequel le monomère à base d'acide carboxylique insaturé est inclus dans une quantité comprise entre 0,1 partie en poids et 5 parties en poids pour 100 parties en poids du monomère à base d'ester acide (méth)acrylique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020180164124
- KR 1020190109115
- US 6448330 B
- US 6120638 A